# EUROPEAN PATENT SPECIFICATION

(11) **EP 4 446 960 B1**
(45) Date of publication and mention of the grant of the patent: **26.02.2025**
(21) Application number: 24162001.2
(22) Date of filing: 07.03.2024
(51) Int. Cl.: G06Q 10/0631, G06Q 10/087, G06Q 30/0201, G06Q 30/0202, G06N 20/00

(54) **SYSTEMS AND METHODS FOR IDENTIFICATION AND REPLENISHMENT OF TARGETED ITEMS ON SHELVES OF STORES**
SYSTEME UND VERFAHREN ZUR IDENTIFIZIERUNG UND NACHFÜLLUNG VON GEZIELTEN ARTIKELN AUF REGALEN VON LAGERN
SYSTÈMES ET PROCÉDÉS D'IDENTIFICATION ET DE RÉAPPROVISIONNEMENT D'ARTICLES CIBLÉS SUR DES ÉTAGÈRES DE MAGASINS

(30) Priority: 11.04.2023 IN 202321026942
(43) Date of publication of application: 16.10.2024
(73) Proprietor: Tata Consultancy Services Limited, Maharashtra (IN)
(72) Inventor: PARVATAM LAKSHMI, SAI RAVIKANTH, 600097 Chennai, Tamil Nadu (IN); KRISHNAN, MOHAN, 600097 Chennai, Tamil Nadu (IN); AMBALKAR, SAMEER VASANT, 400607 Thnae West, Maharashtra (IN)
(74) Representative: Goddar, Heinz J.

(56) References cited:
- US-A1- 2003 225 635
- US-A1- 2009 125 385
- US-A1- 2017 068 973
- US-A1- 2021 201 235
- US-A1- 2022 188 756

## Description

### CROSS-REFERENCE TO RELATED APPLICATIONS AND PRIORITY

The present application claims priority to Indian application no. 202321026942, filed on April 11, 2023.

### TECHNICAL FIELD

The disclosure herein generally relates to targeted shelf replenishment for efficient store operations, and, more particularly, to systems and methods for identification and replenishment of targeted items on shelves of stores.

### BACKGROUND

Retail stores have limited visibility of on shelf inventory. With walk-in customers and online order (both third party orders and orders from retailers) pickers consuming on the shelf inventory it has become critical task to ensure stocks are available. The efficiency of replenishing store inventory is critical to a retailer's overall operating efficiency, profitability, and customer experience. Every time a customer walks-in to buy a specific product and cannot find it on the shelf would impact the customer experience. Conventional approaches are reactive in nature, wherein manual gap scan or camera-based gap scan are done, and such approaches are also infrastructure and labor heavy. Ensuring stock availability on shelves of stores and replenishing one or more stocks at right time is critical from the perspective of a) minimizing labor effort towards shelf replenishment and b) prevent loss of sale through timely replenishments.

US Patent Application no. US2003/225635A1 describes an inventory agent in a supply chain management system. Particularly, inventory data relating to stock in an inventory is received and the inventory data is applied to a conditional probabilistic predictive statistical algorithm. Further, a predicted inventory level is calculated and the calculated predicted inventory level is used to determine whether to order additional stock for the inventory. Furthermore, the statistical algorithm uses a conditional probabilistic model to process the data and the inventory agent is in a supply chain management system (*Abstract*). Further, US Patent Application no. US2009/125385A1 describes a time phased forecasting and replenishment system for retail organizations which can be used for inventory management and financial management. Particularly, one or more computers create time phased plans for one or more retail facilities, such as various types of retail stores and/or various types of suppliers. Further, the system calculates projected sales for each product at each facility and calculates projected replenishment shipments between facilities and suppliers a specified number of weeks into the future. Furthermore, the calculated forecasts and replenishments are done in ways that account for the unique needs of retail organizations and allow processing and storage of the large data volumes typical in many retail organizations (*Abstract*). Furthermore, US Patent Application no. US2021/201235A1 describes techniques for intelligent distribution of products. Particularly, forecasting data including an expected demand of a stock keeping unit is received and a target inventory of the SKU is determined to satisfy the expected demand. Further, a regional target inventory of the SKU of a region is determined that includes a plurality of fulfillment centers. Furthermore, historical data including the inbound and outbound shipment history of a fulfillment center in the plurality of fulfillment centers is received and a profile for the fulfillment center is generated. Thereafter, a portion of the regional target inventory is assigned to the fulfillment center and instructions to a device are transmitted to stock a number of SKUs in the fulfillment center based on the portion (*Abstract*).

### SUMMARY

Embodiments of the present disclosure present technological improvements as solutions to one or more of the above-mentioned technical problems recognized by the inventors in conventional systems. The invention is set out in appended set of claims.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 depicts an exemplary system 100 for identification and replenishment of targeted items on shelves of stores, in accordance with an embodiment of the present disclosure.
FIG. 2 depicts an exemplary flow chart illustrating a method for identification and replenishment of targeted items on shelves of stores, using the system of FIG. 1, in accordance with an embodiment of the present disclosure

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As mentioned earlier, retail stores have limited visibility of on shelf inventory. The efficiency of replenishing store inventory is critical to a retailer's overall operating efficiency, profitability, and customer experience. Every time a customer walks-in to buy a specific product and cannot find it on the shelf would impact the customer experience. Conventional approaches are reactive in nature and are also infrastructure and labor heavy. Ensuring stock availability on shelves of stores and replenishing one or more stocks at right time is critical from the perspective of a) minimizing labor effort towards shelf replenishment and b) prevent loss of sale through timely replenishments.

Embodiments of the present disclosure provide systems and methods for identification and replenishment of targeted items on shelves of stores. More specifically, the system and method of the present disclosure pre-process input data pertaining to sales of items and determine stock keeping unit (SKU) wise optimal bucket size and predict one or more sales events for individual SKU based on historical events. Further the system and method generate stock position - predicted balance shelf quantity at a required point in time based on planning bucket sizes. The system and method also determine a top-up quantity for each SKU for the planning bucket sizes and further generate a pick-up list using smart batching of top-up requests based on SKU priorities (e.g., fast moving items, positive customer feedback, good customer experience, increase in footfalls for specific items being sold, and the like). Furthermore, pick-up list and top-up requests are executed wherein the shelf inventory management is done to ensure items are topped up at the right time. Based on the execution, the system and method of the present disclosure then continually predict rate of sales or forecast the rate of sales and events at one or more intervals throughout the day (e.g., intraday). The steps of predicting sales events, generating stock position - predicted balance shelf quantity, determining a top-up quantity for each SKU for the planning bucket sizes and generating a pick-up list using smart batching of top-up requests based on SKU priorities are executed at the beginning of the day and during the day based on the actual intraday sales, the sales events are predicted again based on the current sales trends using intraday models as implemented by the system and method of the present disclosure. The steps of generating stock position - predicted balance shelf quantity, determining a top-up quantity for each SKU for the planning bucket sizes and generating a pick-up list using smart batching of top-up requests based on SKU priorities are repeated multiple times throughout the day.

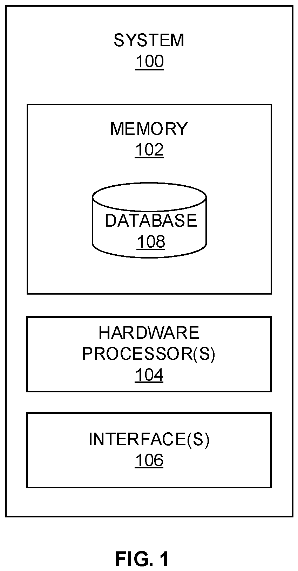

Referring now to the drawings, and more particularly to FIGS. 1 through 2, where similar reference characters denote corresponding features consistently throughout the figures, there are shown preferred embodiments and these embodiments are described in the context of the following exemplary system and/or method.

FIG. 1 depicts an exemplary system 100 for identification and replenishment of targeted items on shelves of stores, in accordance with an embodiment of the present disclosure. In an embodiment, the system 100 may also be referred as 'shelf replenishment system', 'intelligent replenishment system', 'intelligent items replenishment system', and interchangeably used herein. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises store master data, stock keeping unit (SKU) master data, historical and current sales for planogram, events, holidays, inventory, promotional offers, and information pertaining to associates in the stores. The memory 102 further comprises one or more machine learning (ML) models that are trained using historical data as mentioned above, in one embodiment. The one or more ML models may be periodically trained with new dataset pertaining to sales, replenishment, and the like and accordingly the performance of the ML models may be validated. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

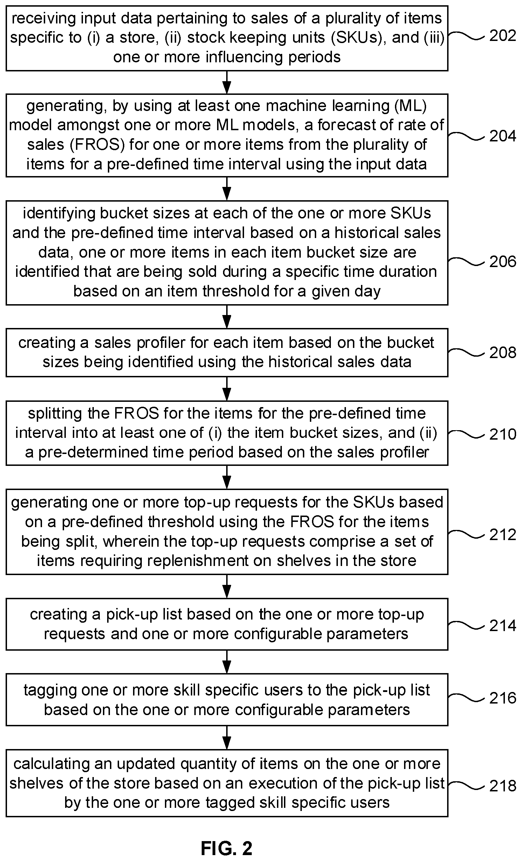

FIG. 2, with reference to FIG. 1, depicts an exemplary flow chart illustrating a method for identification and replenishment of targeted items on shelves of stores, using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, and the flow diagram as depicted in FIG. 2.

At step 202 of the method of the present disclosure, the one or more hardware processors 104 receive input data pertaining to sales of a plurality of items specific to (i) a store, (ii) one or more stock keeping units (SKUs), and (iii) one or more influencing periods. The input data includes master data that comprises information pertaining to items, sales, SKUs, customer related data, store information, planogram, unit of measure (UoM) master data, unit of measure (UoM) conversion data, stock opening balance (or opening balance of each SKU), stock delivery details, employee work hours, employee shift details, employee details, and the like. Additionally, the input data comprises transactional information such as sales, rate of sales being forecasted in the past, and the like. The one or more stock keeping units (SKUs) pertain to various items that are to be sold in the store. The one or more influencing periods include, but are not limited to, (i) one or more promotional offers for one or more items being sold, (ii) one or more seasons (e.g., offers on items during summer, winter, rainy, spring, and the like), and (iii) one or more events (e.g., organizing games, awareness programs on various items, and the like) occurring during a specific time duration (e.g., say during regular days, business days, holidays, festivities, and the like). Table 1 below illustrates at least a subset of input data obtained by the system 100 which depicts information pertaining to various SKUs.

**Table 1**

| org_unit_i d | sku_i d | sku_des c | prod_categor y | prod_sub_categor y | brand_nam e |
|---|---|---|---|---|---|
| 1 | 123 | SKU 1 | Product category 1 | Product Sub-category 1 | Brand 1 |
| 1 | 121 | SKU 2 | Product category 2 | Product Sub-category 2 | Brand 2 |
| 1 | 111 | SKU 3 | Product Category3 | Product Sub-category 3 | Brand 3 |
| 1 | 109 | SKU 4 | Product Category4 | Product Sub-category 4 | Brand 4 |
| 1 | 110 | SKU 5 | Product Category 5 | Product Sub-category 5 | Brand 5 |

Table 2 below illustrates information pertaining to influencing periods obtained by the system 100 in step 202.

**Table 2**

| org_un it_id | store _id | dept _id | special _date | even t_id | store_ope n_time | store_clos e_time | Descri ption | holiday _type |
|---|---|---|---|---|---|---|---|---|
| 1 | 100 0 | 1 | 23-04-23 | 88 | 7:00:00 | 22:00:00 | St. Georg e's Day | NA |
| 1 | 100 0 | 1 | 22-04-23 | 47 | 7:00:00 | 22:00:00 | Stephe n Lawrence Day | NA |
| 1 | 100 0 | 1 | 18-04-23 | 4 | 7:00:00 | 22:00:00 | Yom HaSho ah | NA |
| 1 | 100 0 | 1 | 17-04-23 | 12 | 7:00:00 | 22:00:00 | Orthod ox Easter Monda y | NA |
| 1 | 100 0 | 1 | 16-04-23 | 84 | 7:00:00 | 22:00:00 | Orthod ox Easter | NA |
| 1 | 100 0 | 1 | 15-04-23 | 3 | 7:00:00 | 22:00:00 | Orthod ox Holy Saturd ay | NA |
| 1 | 100 0 | 1 | 14-04-23 | 68 | 7:00:00 | 22:00:00 | Orthod ox Good Friday | NA |
| 1 | 100 0 | 1 | 13-04-23 | 70 | 7:00:00 | 22:00:00 | Last day of Passov er | NA |
| 1 | 100 0 | 1 | 10-04-23 | 7 | 7:00:00 | 22:00:00 | Easter Monda y | NA |
| 1 | 100 0 | 1 | 09-04-23 | 82 | 7:00:00 | 22:00:00 | Easter Sunda y | NA |

Referring to steps of FIG. 2, at step 204 of the method of the present disclosure, the one or more hardware processors 104 generate, by using at least one machine learning (ML) model amongst one or more ML models via the one or more hardware processors, a forecast of rate of sales for one or more items from the plurality of items for a pre-defined time interval (e.g., say day level). The one or more ML models are trained using historical dataset pertaining to sales, events, influencing periods, SKUs, item bucket sizes, pick-up lists, top-up requests, execution of the pick-up lists, top-up requests, items that needed to be prioritized, customer feedback and experience during transaction and item purchase, and the like. The selection of the at least one machine learning (ML) model amongst the one or more ML models is based on a level of training on the historical sales data and validation of associated performance therebetween. For instance, one or more performance metrics such as true positive rate, recall, false positive rate, precision, accuracy, F-measure, Mean Absolute Error (MAE), and the like are evaluated by the system 100 and based on the best performance metric of each ML model, specific ML model is selected for implementation by the system 100 for generating the forecast of rate of sales for one or more items during real-time or near real-time events (e.g., transactions at store, purchase, and the like). Examples of the one or more ML models include Random Forest, Support Vector Machine (SVM), linear regression, decision trees, XGBoost, and the like. It is to be understood by person having ordinary skill in the art or person skilled in the art that such examples of ML models and their implementation by the system 100 shall not be construed as limiting the scope of the present disclosure. The selection and training of the one or more ML models may be better understood by way of following description:

At first, the historical data may be split based on split percentage, wherein split_percentage=x, means where value of 'x' is say, 0.2 which means first 80 % of the historical data is allocated for training and last 20% is allocated for testing. Secondly, influential features are selected based on base model's relative importance which should be greater than feature_imp_val=y, wherein value of y is say, 0.05. It is to be understood by person having ordinary skill in the art or person skilled in the art that such exemplary values of `x' and 'y' are configurable and may vary depending upon the implementation of the system 100 in various computing environments and shall not be construed as limiting the scope of the present disclosure. Next, with the selected feature hyperparameters tuning is done using RandomizedSearchCV. Finally, the ML models are trained on the complete historical dataset by using the best hyperparameters and selected features. Features that have p% (e.g., p=5% wherein 'p' is configurable) relative feature importance with respect to most influential feature were selected. For instance, features may include, but are not limited to, store id, dept_id, sales rate, promotion, day_type, holiday, and the like. Feature importance value for the above features may have a respective value such as store_id=0.005, dept_id=-0.21, sales rate=0.4, promotion=0.12, day_type=0.11, holiday=0.155, and the like. Relative feature importance value for the above features may have a respective value such as store_id=1.25, dept_id=-52.5, sales rate=100, promotion=30, day_type=27.5, holiday=38.75, and the like. The selection of the above-mentioned features is based on the importance value and/or relative importance value, and associated SKU(s). Hyperparameters such as but are not limited to, max_depth, colsample_bylevel, colsample_bytree, learning_rate, subsample, n_estimators, booster, scoring, and the like were tuned using a random grid search method (e.g., a hyperparameter tuning technique as known in the art).

Table 3 illustrates forecast of rate of sales based on the input data obtained by the system.

**Table 3**

| org_unit _id | store _id | dept_ id | sku_ id | busind _id | fcst_dt tm | fcst_va lue | original_v alue | day_ty pe |
|---|---|---|---|---|---|---|---|---|
| 1 | 1000 | 1 | SKU 1 | 1 | 17-12-22 0:00 | 3 | 3 | event |
| 1 | 1000 | 1 | SKU 2 | 1 | 17-12-22 0:00 | 4 | 4 | event |
| 1 | 1000 | 1 | SKU 3 | 1 | 17-12-22 0:00 | 2 | 2 | event |
| 1 | 1000 | 1 | SKU 4 | 1 | 17-12-22 0:00 | 2 | 2 | event |
| 1 | 1000 | 1 | SKU 5 | 1 | 17-12-22 0:00 | 2 | 2 | event |

At step 206 of the method of the present disclosure, the one or more hardware processors 104 identify one or more item bucket sizes at each of the one or more SKUs and the pre-defined time interval based on a historical sales data (also referred as historical data, or historical dataset and interchangeably used herein). One or more items in each of the one or more item bucket sizes are identified as being sold (or items that are sold) during a specific time duration based on an item threshold for a given day. Table 4 illustrates the one or more item bucket sizes at the one or more SKUs and at the day level.

**Table 4**

| org_unit_id | store_id | sku_id | day_type | period |
|---|---|---|---|---|
| 1 | 1000 | SKU1 | event | 240 |
| 1 | 1000 | SKU1 | promo | 240 |
| 1 | 1000 | SKU1 | regular | 240 |
| 1 | 1000 | SKU2 | event | 240 |
| 1 | 1000 | SKU2 | promo | 240 |
| 1 | 1000 | SKU2 | regular | 240 |
| 1 | 1000 | SKU3 | event | 240 |
| 1 | 1000 | SKU3 | promo | 240 |
| 1 | 1000 | SKU3 | regular | 240 |
| 1 | 1000 | SKU4 | event | 240 |
| 1 | 1000 | SKU4 | promo | 240 |
| 1 | 1000 | SKU4 | regular | 240 |
| 1 | 1000 | SKU 5 | event | 240 |
| 1 | 1000 | SKU 5 | promo | 240 |
| 1 | 1000 | SKU 5 | regular | 240 |

Item bucket size is based on maximum shelf capacity (also referred as max shelf cap and interchangeably used herein), wherein the system 100 takes maximum bucket aggregation that is less than p% (e.g., value of p is configurable wherein say p=70 % of maximum shelf capacity in a given store (e.g., say store A). Below pseudo code illustrates a method for identifying the one or more item bucket sizes at the one or more SKUs and at the day level.

Pseudo code for Item bucket size (also referred as bucket size and interchangeably used herein) identification:
Min bucket size = 60 min
max shelf cap = 40
cutoff = 0.7
step1: get aggregate data at Min bucket size
step2: calculate average value of last 30 days at min bucket size
step3: bucket = previous bucket = Min bucket size
loop condition: avg_val < max shelf cap * cutoff
.... previous bucket = bucket
.... bucket = next bucket
.... avg_val = aggregate value at next bucket
previous bucket is the final bucket
example:
bucket list = [60, 120, 180]
avg_val = 20 at 60 min bucket
max shelf cap = 50
cutoff-- 0.7
avg_val_60 = 20 <= 35 (max shelf cap * cutoff) -- pass
avg_val_120 = 33 <= 35 -- pass
avg_val_180 = 45 <= 35 --fail
final bucket size = 120

It is to be understood by person having ordinary skill in the art or person skilled in the art that the above pseudo code for identification of the one or more item bucket sizes is an exemplary method, and such pseudo code shall not be construed as limiting the scope of the present disclosure. Similarly, it is to be further understood by person having ordinary skill in the art or person skilled in the art that the values specified in the above pseudo code shall not be construed as limiting the scope of the present disclosure and may vary depending upon the implementation of the method described herein in one or more various environments (e.g., store setups).

At step 208 of the method of the present disclosure, the one or more hardware processors 104 create a sales profiler for each of the one or more items based on the one or more item bucket sizes being identified using the historical sales data. At step 210 of the method of the present disclosure, the one or more hardware processors 104 split the forecast of rate of sales for the one or more items for the pre-defined time interval into at least one of (i) the one or more item bucket sizes, and (ii) a pre-determined time period (e.g., hour level) based on the sales profiler. The step of splitting the forecast of rate of sales for the one or more items for the pre-defined time interval into at least one of (i) the one or more item bucket sizes, and (ii) a pre-determined time period (e.g., hour level), may be referred as split output and interchangeably used herein. The sales profiler creation depends on historic sales transaction, day type (e.g., weekday, weekend, or event day) and item bucket size. Firstly, the system 100 aggregates transaction(s) at bucket level, and then finds the sales profiler at day level of last one month data (e.g., one month data is an example, and such timeline is configurable and may vary depending on the implementation of the system 100 and the method in various environments as mentioned above). After this, average of the sales profiler is taken with respect to each item bucket size. Below Table 5 illustrates an exemplary sales profiler created by the system 100.

**Table 5**

| org_unit_id | store_id | sku_id | trans_time | day_type | profile |
|---|---|---|---|---|---|
| 1 | 629 | SKU1 | 0:00:00 | event | 0 |
| 1 | 629 | SKU1 | 0:00:00 | promo | 0 |
| 1 | 629 | SKU1 | 0:00:00 | regular | 0 |
| 1 | 629 | SKU1 | 2:00:00 | event | 0 |
| 1 | 629 | SKU1 | 2:00:00 | promo | 0 |
| 1 | 629 | SKU1 | 2:00:00 | regular | 0 |
| 1 | 629 | SKU1 | 4:00:00 | event | 0 |
| 1 | 629 | SKU1 | 4:00:00 | promo | 0 |
| 1 | 629 | SKU1 | 4:00:00 | regular | 0 |
| 1 | 629 | SKU1 | 6:00:00 | event | 0.113636 |
| 1 | 629 | SKU1 | 6:00:00 | promo | 0.083333 |
| 1 | 629 | SKU1 | 6:00:00 | regular | 0 |
| 1 | 629 | SKU1 | 8:00:00 | event | 0.082323 |
| 1 | 629 | SKU1 | 8:00:00 | promo | 0.111111 |
| 1 | 629 | SKU1 | 8:00:00 | regular | 0.333333 |
| 1 | 629 | SKU1 | 10:00:00 | event | 0.197601 |
| ... | ... | ... | ... | ... | ... |
| 1 | 629 | SKU5 | 16:00:00 | promo | 0.285714 |
| 1 | 629 | SKU5 | 16:00:00 | regular | 0.115385 |
| 1 | 629 | SKU5 | 18:00:00 | event | 0.105708 |
| 1 | 629 | SKU5 | 18:00:00 | promo | 0 |
| 1 | 629 | SKU5 | 18:00:00 | regular | 0.096154 |

Table 6 illustrates splitting of forecast of the rate of sales for the one or more item bucket sizes by the system 100.

**Table 6**

| org_unit _id | store _id | dept_ id | sku_ id | busind _id | fcst_dt tm | day_ty pe | fcst_va lue | original_v alue |
|---|---|---|---|---|---|---|---|---|
| 1 | 1000 | 1 | SKU 5 | 1 | 17-12-22 0:00 | event | 0 | NULL |
| 1 | 1000 | 1 | SKU 5 | 1 | 17-12-22 2:00 | event | 0 | NULL |
| 1 | 1000 | 1 | SKU 5 | 1 | 17-12-22 4:00 | event | 0 | NULL |
| 1 | 1000 | 1 | SKU 5 | 1 | 17-12-22 6:00 | event | 0 | NULL |
| 1 | 1000 | 1 | SKU 5 | 1 | 17-12-22 8:00 | event | 0 | NULL |
| 1 | 1000 | 1 | SKU 5 | 1 | 17-12-22 10:00 | event | 0 | NULL |
| 1 | 1000 | 1 | SKU 5 | 1 | 17-12-22 12:00 | event | 0 | NULL |
| 1 | 1000 | 1 | SKU 5 | 1 | 17-12-22 14:00 | event | 0 | NULL |
| 1 | 1000 | 1 | SKU 5 | 1 | 17-12-22 16:00 | event | 0 | NULL |
| 1 | 1000 | 1 | SKU 5 | 1 | 17-12-22 18:00 | event | 0 | NULL |
| ··· | ··· | ··· | ··· | ··· | ··· | ··· | ··· | ··· |
| 1 | 1000 | 1 | SKU 4 | 1 | 17-12-22 10:00 | event | 1 | NULL |
| 1 | 1000 | 1 | SKU 4 | 1 | 17-12-22 12:00 | event | 1 | NULL |
| 1 | 1000 | 1 | SKU 4 | 1 | 17-12-22 14:00 | event | 0 | NULL |
| 1 | 1000 | 1 | SKU 4 | 1 | 17-12-22 16:00 | event | 0 | NULL |
| 1 | 1000 | 1 | SKU 4 | 1 | 17-12-22 18:00 | event | 0 | NULL |

At step 212 of the method of the present disclosure, the one or more hardware processors 104 generate one or more top-up requests for the one or more SKUs based on a pre-defined threshold using the split forecast of rate of sales (also referred as (i) the forecast of rate of sales for the one or more items being split, or (ii) split output as mentioned above). The one or more top-up requests comprise a set of items requiring replenishment on one or more shelves in the store. The predicted output, which is the rate of sales prediction for every period (e.g., or the splitting of forecast of the rate of sales), needs to be grouped to create top-up requests (or buckets) based on the projected quantity on the one or more shelves in the store. The top-up requests re to be created at various times periods based on various levels projected quantity on the shelves as per one or more rules (e.g., pre-defined and configurable depending upon the implementation of the system 100 and method of the present disclosure in various environments/infrastructures). For instance, rule 1 may be configured by the system 100.as: when the projected quantity on shelf becomes b1% (e.g., 40-50%) create a top up request with low priority. Rule 2 may be configured by the system 100 as: when the projected quantity on shelf becomes b2% (e.g., 25-39%) create a top up request with medium priority. Rule 3 may be configured by the system 100 as: when the projected quantity on shelf becomes b3% (e.g., 0-24%) create a top up request with high priority. Below Table 6 illustrates a configuration of the rules for defining the priority based on one or more thresholds.

**Table 6**

| Range id | Projected quantity with respect to shelf capacity |
|---|---|
| L | 40-50% |
| M | 25-39% |
| H | 0-24% |

Table 7 illustrates another set of rules configured by the system 100.

**Table 7**

| **Customer Fav.** | **High Margin** | **Projected Qty. Range** | **Priority** |
|---|---|---|---|
| No | No | L | Low |
| No | No | H | High |
| Yes | No | L | Medium |
| Yes | No | M | Medium |
| Yes | Yes | L | High |
| No | Yes | M | High |
| Yes | Yes | L | High |
| No | No | M | Medium |

Table 8 illustrates exemplary items/products and rules for these items as applicable being configured by the system 100.

**Table 8**

| **SKU Id** | **Customer Fav.** | **High Margin** | **Projected Quantity Range** | **Priority** |
|---|---|---|---|---|
| SKU1 | No | No | L | Low |
| SKU1 | No | No | H | High |
| SKU2 | Yes | No | L | Medium |
| SKU2 | Yes | No | M | Medium |
| SKU3 | Yes | Yes | L | High |
| SKU3 | No | Yes | M | High |
| SKU4 | Yes | Yes | L | High |
| SKU4 | No | No | M | Medium |

At step 214 of the method of the present disclosure, the one or more hardware processors 104 create a pick-up list based on the one or more top-up requests and one or more configurable parameters. The one or more configurable parameters comprise (i) an effort type (fixed and flexible effort) required for executing the pick-up list, (ii) an item priority, and (iii) a pick-up group. In an embodiment, the pick-up list comprises at least one of (i) an item top-stock pick location, and (ii) a store backstage pick location. The above step of pick-up list creation/generation may be better understood by way of following description. At first, SKUs across pick groups are not combined in single pick list. pick group is defined as a group of SKUs which are (i) same category (frozen, ambient, chilled, fresh), and (ii) same or adjacent subcategories (within frozen such as meat and ready to eat, ambient all groceries, beverages). In the second step, pick up SKUs are grouped together based on top-up completion time. In the third step, a top-up schedule for each SKU is generated/created for at least `m' successive periods (e.g., say m=4, wherein during the first two periods the SKU priority is from master sales data, and in the last two periods the priority is H). Then the system 100 determines which record has to be taken for first iteration since there are 4 SKUs as mentioned above. Accordingly, relevant record is picked up which is having the remaining quantity close to credible display (3 record - credible display). Finally, the record with earlier period and batch is picked based on the fill by time criterion. The system 100 and the method also describe various scenarios for pick-up list as mentioned below:
**Scenario 1 A:**
   1. Minimum quantity across all the SKU's for top up met to generate the pick list
   2. If yes, then check inventory availability against each SKU
   3. If available, then generate the pick list and assign time duration to complete task
**Scenario 1 B:**
   1. Minimum quantity across all the SKU's for top up met to generate the pick list
   2. If no, check for customer favourites, revenue generator, and the like and generate the pick by selecting SKUs in the following order
      a. Consider SKU which are customer favourites from current list
      b. Consider the non-customer favourite from the current list
   3. Generate the pick list and assign time duration to complete the task
**Scenario 2**
   1. Minimum quantity met to generate the pick list
   2. If yes, then check the inventory availability against each SKU
   3. **Inventory not available,** then check for store receiving shipment details
   4. SKU's, available in shipment if yes, check for shipment ETA and accordingly generate the pick list align to shipment receiving time
**Scenario 3**
   1. Minimum quantity met to generate the pick list
   2. If yes, then check the inventory availability against each SKU
   3. Inventory not available, then check for store receiving shipment details
   4. SKU's not available in shipment then notify the store replenishment app about the gap
   5. Create the report for Store manager to place the order for SKU.

Below Table 9 illustrates example top-up request and pick-up list being generated by the system 100

**Table 9**

| **TopUP ID** | **At** | **Fill By** | **SKU** | **Priority SKU** | **Pick Loc** | **Qty** | **Variable Effort** | **@10 qty** | **@11 qty** | **@12 qty** | ··· |
|---|---|---|---|---|---|---|---|---|---|---|---|
| 1 | 9 | 10 | SK1 | Y | Backstage | 5 | 4.2 | 2 | 5 | 11 | ··· |
| 2 | 9 | 10 | SK2 | Y | Backstage | 6 | 5.0 | 3 | 6 | 8 | ··· |
| 3 | 9 | 10 | SK3 | Y | Backstage | 7 | 5.8 | 4 | 7 | 10 | ··· |
| 4 | 9 | 11 | SK4 | N | Backstage | 5 | 4.2 | 4 | 5 | 9 | ··· |
| 5 | 9 | 11 | SK5 | N | Backstage | 6 | 5.0 | 2 | 6 | 8 | ··· |

Table 10 illustrates pick-up list generation for scenario 1 (1A/1B).

**Table 10**

| **Scenari o** | **Pic k List No** | **Fill By** | **# SKU s** | **Quantit y** | **Variabl e Effort** | **Fixed Effor t** | **Total Effor t** | **Fill Start** | **Feasibl e** | **Next Run** | ··· |
|---|---|---|---|---|---|---|---|---|---|---|---|
| 1 | PL1 | 11:00:0 0 | 5 | 29 | 24.2 | 9.5 | 33.7 | 10:26:0 0 | Y | 17:0 0 | ··· |

Table 11 illustrates another example of pick-up list which also indicates SKU priority, and pick-up location, and effort required.

**Table 11**

| **TopUP ID** | **At** | **Fill By** | **SKU** | **Priority SKU** | **Pick Location** | **Qty** | **Variable Effort** | ··· |
|---|---|---|---|---|---|---|---|---|
| 6 | 10 | 11 | SK6 | Y | Backstage | 10 | 8.3 | ··· |
| 7 | 10 | 11 | SK7 | Y | Backstage | 12 | 10.0 | ··· |
| 8 | 10 | 12 | SK8 | Y | Backstage | 20 | 16.7 | ··· |
| 9 | 10 | 11 | SK9 | N | Backstage | 20 | 16.7 | ··· |
| 10 | 10 | 12 | SK10 | N | Backstage | 10 | 8.3 | ··· |

Table 12 illustrates the pick-up list being generated by the system 100 including the pick-up validity period, location, quantity, unit of measure, and so on.

**Table 12**

| org_ unit_ id | stor e_i d | sku _id | pick _id | line _no | pick_ validi ty | Loc atio n | pic k_q ty | pick_ qty_u om | process _run_ti me | schd_tas k_end_dt tm |
|---|---|---|---|---|---|---|---|---|---|---|
| 1 | 100 0 | SK U1 | 1.11 E+0 8 | 266 452 92 | 1 | 188 5 | 1 | CASE | 17-12-229:00 | 17-12-22 11:00 |
| 1 | 100 0 | SK U2 | 1.11 E+0 8 | 299 970 87 | 1 | 227 5 | 3 | CASE | 17-12-229:00 | 17-12-22 11:00 |
| 1 | 100 0 | SK U3 | 1.11 E+0 8 | 530 380 99 | 1 | 211 | 3 | CASE | 17-12-229:00 | 17-12-22 11:00 |
| 1 | 100 0 | SK U4 | 1.11 E+0 8 | 270 284 76 | 1 | 223 9 | 4 | CASE | 17-12-229:00 | 17-12-22 11:00 |
| 1 | 100 0 | SK U5 | 1.11 E+0 8 | 336 304 94 | 1 | 269 9 | 3 | CASE | 17-12-229:00 | 17-12-22 11:00 |
| 1 | 100 0 | SK U6 | 1.11 E+0 8 | 201 577 01 | 1 | 183 1 | 3 | CASE | 17-12-229:00 | 17-12-22 11:00 |
| 1 | 100 0 | SK U7 | 1.11 E+0 8 | 400 115 30 | 1 | 269 9 | 4 | CASE | 17-12-229:00 | 17-12-22 11:00 |
| 1 | 100 0 | SK U8 | 1.11 E+0 8 | 804 409 62 | 1 | 170 0 | 5 | CASE | 17-12-22 9:00 | 17-12-22 11:00 |
| 1 | 100 0 | SK U9 | 1.11 E+0 8 | 460 698 84 | 1 | 264 1 | 4 | CASE | 17-12-22 9:00 | 17-12-22 11:00 |
| 1 | 100 0 | SK U1 0 | 1.11 E+0 8 | 526 385 41 | 1 | 269 9 | 5 | CASE | 17-12-22 9:00 | 17-12-22 11:00 |
| 1 | 100 0 | SK U2 | 1.12 E+0 8 | 248 772 59 | 1 | 188 5 | 1 | CASE | 17-12-22 15:00 | 17-12-22 17:00 |
| 1 | 100 0 | SK U3 | 1.12 E+0 8 | 266 350 29 | 1 | 227 5 | 3 | CASE | 17-12-22 15:00 | 17-12-22 17:00 |
| 1 | 100 0 | SK U4 | 1.12 E+0 8 | 243 727 32 | 1 | 211 | 3 | CASE | 17-12-22 15:00 | 17-12-22 17:00 |
| 1 | 100 0 | SK U5 | 1.12 E+0 8 | 198 966 90 | 1 | 223 9 | 4 | CASE | 17-12-22 15:00 | 17-12-22 17:00 |
| 1 | 100 0 | SK U6 | 1.12 E+0 8 | 130 010 44 | 1 | 269 9 | 3 | CASE | 17-12-22 15:00 | 17-12-22 17:00 |
| 1 | 100 0 | SK U7 | 1.12 E+0 8 | 241 403 57 | 1 | 205 | 6 | CASE | 17-12-22 15:00 | 17-12-22 17:00 |
| 1 | 100 0 | SK U8 | 1.12 E+0 8 | 288 514 73 | 1 | 175 | 3 | CASE | 17-12-22 15:00 | 17-12-22 17:00 |

Table 13 illustrates tagging one or more skill specific users to the pick-up list based on the one or more configurable parameters.

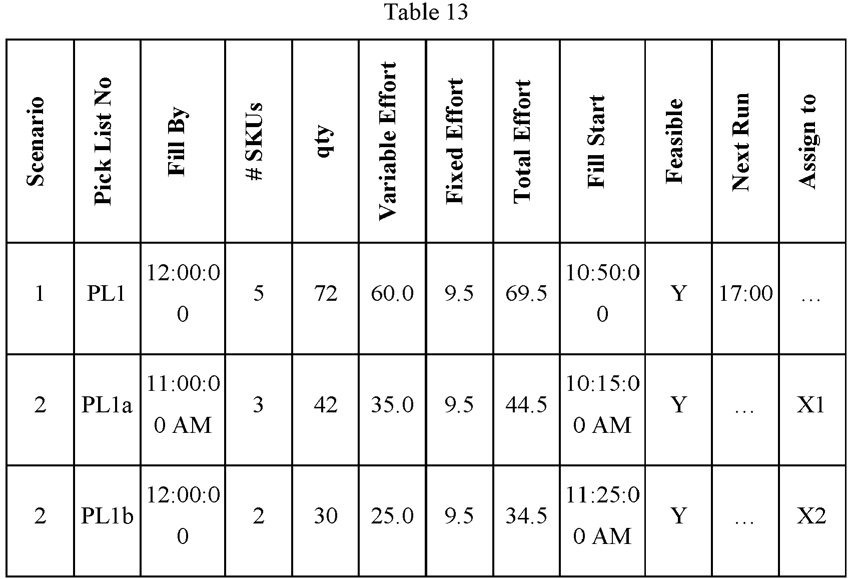

More specifically, the above Table 13 describes the step of 216 wherein at step 216 of the method of the present disclosure, the one or more hardware processors 104 tag the one or more skill specific users (e.g., X1, X2, and so on) to the pick-up list based on the one or more configurable parameters. The one or more skill specific users are tagged to the pick-up list based on at least one of (i) an availability status, and (ii) one or more pre-defined rules.

Table 14 illustrates tagging of skill specific users (e.g., department wise, effort wise, group wise, and so on) to the pick-up list.

**Table 14**

| store i d | dept_i d | assign_dtt m | req_id | busind_i d | associate_i d | job_id |
|---|---|---|---|---|---|---|
| 1000 | 1 | 15-12-22 15:00 | 11166442 6 | 1 | 1001 | 111664426 1 |
| 1000 | 1 | 03-12-22 17:15 | 11440392 0 | 1 | 1001 | 114403920 1 |
| 1000 | 1 | 15-12-22 15:00 | 11166442 0 | 1 | 1001 | 111664420 1 |
| 1000 | 1 | 03-12-22 21:00 | 11315817 0 | 1 | 1001 | 113158170 1 |
| 1000 | 1 | 03-12-22 19:15 | 11141425 0 | 1 | 1001 | 111414250 1 |
| 1000 | 1 | 01-12-22 21:30 | 11296623 0 | 1 | 1001 | 112966230 1 |
| 1000 | 1 | 16-12-22 9:00 | 11225591 4 | 1 | 1001 | 112255914 1 |
| 1000 | 1 | 16-12-22 9:00 | 11225591 6 | 1 | 1001 | 112255916 1 |
| 1000 | 1 | 16-12-22 12:00 | 11296719 7 | 1 | 1001 | 112967197 1 |
| 1000 | 1 | 16-12-22 12:00 | 11296719 2 | 1 | 1001 | 112967192 1 |
| 1000 | 1 | 16-12-22 15:00 | 11243984 2 | 1 | 1001 | 112439842 1 |
| 1000 | 1 | 16-12-22 15:00 | 11243984 7 | 1 | 1001 | 112439847 1 |
| 1000 | 1 | 17-12-22 9:00 | 11100352 4 | 1 | 1001 | 111003524 1 |

The tagging of skill specific users to the pick-up list involves steps such as mapping the tasks to be performed to the respective staff/labor/employee based on the actual picklist and top-up generated. Taking into consideration the staff availability and the actual picklist, shift indices are assigned to the staff, with the shift type generated in the shift roster acting as the reference point. It also incorporates the break time between two shifts and shifts during planned events. The system 100 takes the shift roster generated and actual appointments as input, one or more rules are applied, and simulation is performed as known in the art to get best shift index for service-based associates/employees/staff to generate the job allocation output. The rules are based on service-based associate, fixed based associates, primary and secondary skills, role based, and so on. The input to the system 100 would be shift-roster, pick-up list data, and output would be allocation/tagging of skill specific users/staff to the pick-up list based on available associates based on roster.

At step 218 of the method of the present disclosure, the one or more hardware processors 104 calculate an updated quantity of items on the one or more shelves of the store based on an execution of the pick-up list by the one or more tagged skill specific users. Below pseudo code/steps illustrate(s) a way of calculating the updated quantity of items on the shelves of the store after execution of the pick-up list by the tagged skilled users.

Pseudo code/steps involved in calculating the updated quantity of items on the shelves:
1. Get the store backstage stock for a particular SKU and maximum shelf capacity of the SKU (assumption is that first time shelf is full)
2. Monitor the sales of the SKU and deduct the sales from maximum shelf capacity and store in database. At any point in time, the updated quantity on shelf is obtained.
3. Based on prediction, the pick-up list (also referred as picklist) gets generated and by how much quantity will be required to refill the shelf (the aim of the system 100 is to always full to maximum shelf capacity) and get store stock.
4. Select maximum of store stock and maximum shelf capacity as the quantity to be refilled.

### Example 1:

Max shelf capacity SKU1 = 20
Stock in backstage of SKU1 = 100
Sales SKU1 till 11 = 10
Current quantity on shelf @11:0am.= Max shelf capacity- Sales SKU1 till 11 i.e. 20-10 = 10
Picklist quantity to be refilled = 10
Picklist executed (action taken) = 10
Post action quantity on Shelf = 20

### Example 2:

Max shelf capacity SKU1 = 40
Stock in backstage of SKU1 = 20
Sales SKU1 till 11 = 30
Current quantity on shelf @11:0am.= Max shelf capacity- Sales SKU1 till 11 i.e. 40-30 = 10
Picklist quantity to be refilled = 30
Picklist executed (action taken)= 20 (as only 20 qty is available in stock)
Post action quantity on Shelf = 30
SQL query
update_shelf_quantity_sql =ʺʺʺ
update wfm_demand.wfm_shelf_repl_action x
set on_shelf_qty = (
select least(max(f.store_stock), max(fmsc)) as shelf_qty
from
(select org_unit_id, store_id, sku_id, store stock, 0 as msc
from wfm_demand.v_p_store_stock
union
select 'xx' as org_unit_id,'xxxx' as store_id, sku_id, "x" as store_stock, max_shelf_cap as msc
from wfm_demand.v_shelf_cap
)f
where f.org_unit_id = x.org_unit_id and f.store_id = x.store_id and f.sku_id = x.sku_id
)
where x.action_dttm >= current_timestamp - interval '30 minutes';

It is to be understood by a person having ordinary skill in the art or person skilled in the art the above steps involved in calculating the updated quantity of items of the one or more shelves for refill are exemplary illustrations and may vary depending on the implementation of the system and method described herein and such examples and pseudo code/steps described herein shall not be construed as limiting the scope of the present disclosure.

The step of generating the one or more top-up requests for the one or more SKUs based on a pre-defined threshold using the split forecast of rate of sales and creating the pick-up list may be better understood by way of following steps performed by the system 100 of the present disclosure.
Step 1: Obtain the beginning quantity at the start of day (which will be maximum shelf capacity)
Step 2: Generate rate of sale for every item bucket size (sales forecast) from the selected ML model
Step 3: At beginning of the day for the given SKU, identify one or more checkpoints (item bucket end time) by when on hand capacity breaches say y1% (e.g., say y1=50%(Low), y1=70%(Medium) and y1=90%(High) of maximum shelf capacity and generate the refill Quantity/refill effort for the above 3 priorities.
Step 4: When the method of the present disclosure is executed for the next run by the systems, the system 100 take input from pick-up list by checking which record (low, medium, high) from the previous refill generation has been generated in pick-up list and sets that point as the next check point for this run to evaluate Step 3 (above step).
Step 5: Step 3 and Step 4 are repeated/executed until end of the Day (Closing time/End of the file) is reached or store Inventory is out of stock for the given SKU.

The system 100 additionally performs some constraints check as specified below:
1. If any SKU does not breach 50% of Max capacity for the entire day, the system 100 does not generate the Top up from above logic.
2. If the store inventory reaches zero for the given SKU, a next inventory arrival is checked and the system 100 waits till that time before generating any further top-ups requests.
3. Before generating the pick-up list, the system 100 checks for associate availability and if the associate is not available, the system 100 still generates the pick-up list and the generated pick-up list remains unassigned and when the system 100 re-runs the next pick-up list the old pick-up list gets deleted from the memory 102/database 108 and the new pick-up list considers those SKUs with updated quantity.

After the first run, the system 100 needs to pass the refill record quantity (index) as input to for generating top-up request(s) which was selected by the system 100 using a batching logic (not shown in FIGS.) to exactly reset the inventory available and recheck point.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:
receiving, via one or more hardware processors (104), input data pertaining to sales of a plurality of items specific to (i) a store, (ii) one or more stock keeping units, SKUs, and (iii) one or more influencing periods (202);
generating, by using at least one machine learning, ML, model amongst one or more ML models via the one or more hardware processors (104), a forecast of rate of sales for one or more items from the plurality of items for a pre-defined time interval (204), wherein the at least one ML model amongst the one or more ML models is selected, based on a level of training on a historical sales data and validation of associated performance including one or more performance metrics, by:
evaluating the one or more performance metrics comprising true positive rate, recall, false positive rate, precision, accuracy, F-measure, and Mean Absolute Error,
selecting the at least one ML model based on a best performance metric of each ML model of the one or more ML models, and
generating, by using the at least one ML model, the forecast of rate of sales for the one or more items;
identifying, via the one or more hardware processors (104), one or more item bucket sizes at each of the one or more SKUs and the pre-defined time interval based on the historical sales data (206), wherein one or more items in each of the one or more item bucket sizes are identified as being sold during a specific time duration based on an item threshold for a given day;
creating, via the one or more hardware processors (104), a sales profiler for each of the one or more items based on the one or more item bucket sizes being identified using the historical sales data (208);
splitting, via the one or more hardware processors (104), the forecast of rate of sales for the one or more items for the pre-defined time interval into at least one of (i) the one or more item bucket sizes, and (ii) a pre-determined time period based on the sales profiler (210);
generating, via the one or more hardware processors (104), one or more top-up requests for the one or more SKUs based on a pre-defined threshold using the forecast of rate of sales for the one or more items being split (212), wherein the one or more top-up requests comprise a set of items requiring replenishment on one or more shelves in the store, wherein the one or more top-up requests are generated for a plurality of time periods based on a plurality of levels of projected quantity of each of the set of items on the one or more shelves in the store as per one or more rules, wherein the one or more rules comprises generating the one or more top-up requests with one of a low priority, a medium priority, and a high priority, based on the projected quantity of each of the set of items on the one or more shelves, each of the low priority, the medium priority, and the high priority being defined based on the pre-defined threshold;
creating, via the one or more hardware processors (104), a pick-up list based on the one or more top-up requests and one or more configurable parameters (214);
tagging, via the one or more hardware processors (104), one or more skill specific users to the pick-up list based on the one or more configurable parameters (216), wherein the one or more skill specific users are tagged to the pick-up list based on at least one of (i) an availability status, and (ii) one or more pre-defined rules, wherein the availability status is based on taking into consideration of staff availability, shift indices assigned to the staff, shift type generated in a shift roster, break time between two shifts and shifts during planned events; and wherein the one or more pre-defined rules are based on service-based associate, fixed based associates, primary and secondary skills, and role based; and
calculating, via the one or more hardware processors (104), an updated quantity of items on the one or more shelves of the store based on an execution of the pick-up list by the one or more tagged skill specific users (218).

2. The processor implemented method as claimed in claim 1, wherein the one or more configurable parameters comprise (i) an effort type required for executing the pick-up list, (ii) an item priority, and (iii) a pick-up group.

3. The processor implemented method as claimed in claim 1, wherein the pick-up list comprises at least one of (i) an item top-stock pick location, and (ii) a store backstage pick location.

4. The processor implemented method as claimed in claim 1, wherein the one or more influencing periods comprise at least one of (i) one or more promotional offers, (ii) one or more seasons, and (iii) one or more events occurring during a specific time duration.

5. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive input data pertaining to sales of a plurality of items specific to (i) a store, (ii) one or more stock keeping units, SKUs, and (iii) one or more influencing periods;
generate, by using at least one machine learning, ML, model amongst one or more ML models, a forecast of rate of sales for one or more items from the plurality of items for a pre-defined time interval, wherein the at least one ML model amongst the one or more ML models is selected, based on a level of training on a historical sales data and validation of associated performance including one or more performance metrics, by:
evaluating the one or more performance metrics comprising true positive rate, recall, false positive rate, precision, accuracy, F-measure, and Mean Absolute Error,
selecting the at least one ML model based on a best performance metric of each ML model of the one or more ML models, and
generating, by using the at least one ML model, the forecast of rate of sales for the one or more items;
identify one or more item bucket sizes at each of the one or more SKUs and the pre-defined time interval based on a historical sales data, wherein one or more items in each of the one or more item bucket sizes are identified as being sold during a specific time duration based on an item threshold for a given day;
create a sales profiler for each of the one or more items based on the one or more item bucket sizes being identified using the historical sales data;
split the forecast of rate of sales for the one or more items for the pre-defined time interval into at least one of (i) the one or more item bucket sizes, and (ii) a pre-determined time period based on the sales profiler;
generate one or more top-up requests for the one or more SKUs based on a pre-defined threshold using the forecast of rate of sales for the one or more items being split, wherein the one or more top-up requests comprise a set of items requiring replenishment on one or more shelves in the store, wherein the one or more top-up requests are generated for a plurality of time periods based on a plurality of levels of projected quantity of each of the set of items on the one or more shelves in the store as per one or more rules, wherein the one or more rules comprises generating the one or more top-up requests with one of a low priority, a medium priority, and a high priority, based on the projected quantity of each of the set of items on the one or more shelves, each of the low priority, the medium priority, and the high priority being defined based on the pre-defined threshold;
create a pick-up list based on the one or more top-up requests and one or more configurable parameters;
tag one or more skill specific users to the pick-up list based on the one or more configurable parameters, wherein the one or more skill specific users are tagged to the pick-up list based on at least one of (i) an availability status, and (ii) one or more pre-defined rules, wherein the availability status is based on taking into consideration of staff availability, shift indices assigned to the staff, shift type generated in a shift roster, break time between two shifts and shifts during planned events; and wherein the one or more pre-defined rules are based on service-based associate, fixed based associates, primary and secondary skills, and role based; and
calculate an updated quantity of items on the one or more shelves of the store based on an execution of the pick-up list by the one or more tagged skill specific users.

6. The system as claimed in claim 5, wherein the one or more configurable parameters comprise (i) an effort type required for executing the pick-up list, (ii) an item priority, and (iii) a pick-up group.

7. The system as claimed in claim 5, wherein the pick-up list comprises at least one of (i) an item top-stock pick location, and (ii) a store backstage pick location.

8. The system as claimed in claim 5, wherein the one or more influencing periods comprise at least one of (i) one or more promotional offers, (ii) one or more seasons, and (iii) one or more events occurring during a specific time duration.

9. One or more non-transitory machine-readable information storage mediums comprising one or more instructions which when executed by one or more hardware processors cause:
receiving input data pertaining to sales of a plurality of items specific to (i) a store, (ii) one or more stock keeping units, SKUs, and (iii) one or more influencing periods;
generating, by using at least one machine learning, ML, model amongst one or more ML models, a forecast of rate of sales for one or more items from the plurality of items for a pre-defined time interval, wherein the at least one ML model amongst the one or more ML models is selected, based on a level of training on a historical sales data and validation of associated performance including one or more performance metrics, by:
evaluating the one or more performance metrics comprising true positive rate, recall, false positive rate, precision, accuracy, F-measure, and Mean Absolute Error,
selecting the at least one ML model based on a best performance metric of each ML model of the one or more ML models, and
generating, by using the at least one ML model, the forecast of rate of sales for the one or more items;
identifying one or more item bucket sizes at each of the one or more SKUs and the pre-defined time interval based on a historical sales data, wherein one or more items in each of the one or more item bucket sizes are identified as being sold during a specific time duration based on an item threshold for a given day;
creating a sales profiler for each of the one or more items based on the one or more item bucket sizes being identified using the historical sales data;
splitting the forecast of rate of sales for the one or more items for the pre-defined time interval into at least one of (i) the one or more item bucket sizes, and (ii) a pre-determined time period based on the sales profiler;
generating one or more top-up requests for the one or more SKUs based on a pre-defined threshold using the forecast of rate of sales for the one or more items being split, wherein the one or more top-up requests comprise a set of items requiring replenishment on one or more shelves in the store, wherein the one or more top-up requests are generated for a plurality of time periods based on a plurality of levels of projected quantity of each of the set of items on the one or more shelves in the store as per one or more rules, wherein the one or more rules comprises generating the one or more top-up requests with one of a low priority, a medium priority, and a high priority, based on the projected quantity of each of the set of items on the one or more shelves, each of the low priority, the medium priority, and the high priority being defined based on the pre-defined threshold;
creating a pick-up list based on the one or more top-up requests and one or more configurable parameters;
tagging one or more skill specific users to the pick-up list based on the one or more configurable parameters, wherein the one or more skill specific users are tagged to the pick-up list based on at least one of (i) an availability status, and (ii) one or more pre-defined rules, wherein the availability status is based on taking into consideration of staff availability, shift indices assigned to the staff, shift type generated in a shift roster, break time between two shifts and shifts during planned events; and wherein the one or more pre-defined rules are based on service-based associate, fixed based associates, primary and secondary skills, and role based; and
calculating an updated quantity of items on the one or more shelves of the store based on an execution of the pick-up list by the one or more tagged skill specific users.

10. The one or more non-transitory machine-readable information storage mediums as claimed in claim 9, wherein the one or more configurable parameters comprise (i) an effort type required for executing the pick-up list, (ii) an item priority, and (iii) a pick-up group, wherein the pick-up list comprises at least one of (i) an item top-stock pick location, and (ii) a store backstage pick location, and wherein the one or more influencing periods comprise at least one of (i) one or more promotional offers, (ii) one or more seasons, and (iii) one or more events occurring during a specific time duration.

## Patentansprüche

1. Prozessorimplementiertes Verfahren, umfassend:
Empfangen, über einen oder mehrere Hardwareprozessoren (104), von Eingangsdaten, die sich auf den Verkauf einer Mehrzahl von Artikeln beziehen, die spezifisch sind für (i) ein Geschäft, (ii) eine oder mehrere Lagerhaltungseinheiten, SKUs, und (iii) eine oder mehrere Beeinflussungsperioden (202);
Erzeugen, unter Verwendung mindestens eines Maschinenlernmodells, ML-Modells, unter einem oder mehreren MI,-Modellen über den einen oder die mehreren Hardwareprozessoren (104), einer Vorhersage der Verkaufsrate für einen oder mehrere Artikel aus der Mehrzahl von Artikeln für ein vordefiniertes Zeitintervall (204), wobei das mindestens eine MI,-Modell unter dem einen oder den mehreren MI,-Modellen ausgewählt wird, basierend auf einem Grad des Trainings an historischen Verkaufsdaten und der Validierung der zugehörigen Leistung, einschließlich einer oder mehrerer Leistungsmetriken, durch:
Auswerten der einen oder mehreren Leistungsmetriken, die eine echte positive Rate, einen Rückruf, eine falsche positive Rate, eine Präzision, eine Genauigkeit, ein F-Maß und einen mittleren absoluten Fehler umfassen,
Auswählen des mindestens einen ML-Modells basierend auf einer besten Leistungsmetrik jedes ML-Modells des einen oder der mehreren ML-Modelle, und
Erzeugen, unter Verwendung des mindestens einen ML-Modells, der Vorhersage der Verkaufsrate für den einen oder die mehreren Artikel;
Identifizieren, über den einen oder die mehreren Hardwareprozessoren (104), einer oder mehrerer Artikelbehältergrößen an jeder der einen oder mehreren SKUs und des vordefinierten Zeitintervalls basierend auf den historischen Verkaufsdaten (206), wobei ein oder mehrere Artikel in jeder der einen oder mehreren Artikelbehältergrößen als während einer spezifischen Zeitdauer basierend auf einem Artikelschwellenwert für einen bestimmten Tag verkauft identifiziert werden;
Erstellen, über den einen oder die mehreren Hardwareprozessoren (104), eines Verkaufsprofilers für jeden des einen oder der mehreren Artikel basierend auf der einen oder den mehreren Artikelbehältergrößen, die unter Verwendung der historischen Verkaufsdaten identifiziert werden (208);
Aufteilen, über den einen oder die mehreren Hardwareprozessoren (104), der Vorhersage der Verkaufsrate für den einen oder die mehreren Artikel für das vordefinierte Zeitintervall in mindestens eines von (i) der einen oder den mehreren Artikelbehältergrößen und (ii) einer vorbestimmten Zeitperiode basierend auf dem Verkaufsprofiler (210);
Erzeugen, über den einen oder die mehreren Hardwareprozessoren (104), einer oder mehrerer Nachfüllanforderungen für die eine oder die mehreren SKUs basierend auf einem vordefinierten Schwellenwert unter Verwendung der Vorhersage der Verkaufsrate für den einen oder die mehreren Artikel, die aufgeteilt werden (212), wobei die eine oder die mehreren Nachfüllanforderungen einen Satz von Artikeln umfassen, die Auffüllung in einem oder mehreren Regalen in dem Geschäft erfordern, wobei die eine oder die mehreren Nachfüllanforderungen für eine Mehrzahl von Zeitperioden basierend auf einer Mehrzahl von Ebenen der projizierten Menge jedes des Satzes von Artikeln in dem einen oder den mehreren Regalen in dem Geschäft gemäß einer oder mehreren Regeln erzeugt werden, wobei die eine oder die mehreren Regeln Erzeugen der einen oder der mehreren Nachfüllanforderungen mit einer von einer niedrigen Priorität, einer mittleren Priorität und einer hohen Priorität basierend auf der projizierten Menge jedes des Satzes von Artikeln in dem einen oder den mehreren Regalen umfassen, wobei jede der niedrigen Priorität, der mittleren Priorität und der hohen Priorität basierend auf dem vordefinierten Schwellenwert definiert ist;
Erstellen, über den einen oder die mehreren Hardwareprozessoren (104), einer Abholliste basierend auf der einen oder den mehreren Nachfüllanforderungen und einem oder mehreren konfigurierbaren Parametern (214);
Markieren, über den einen oder die mehreren Hardwareprozessoren (104), eines oder mehrerer fähigkeitsspezifischer Benutzer auf der Abholliste basierend auf dem einen oder den mehreren konfigurierbaren Parametern (216), wobei der eine oder die mehreren fähigkeitsspezifischen Benutzer auf der Abholliste basierend auf mindestens einem von (i) einem Verfügbarkeitsstatus und (ii) einer oder mehreren vordefinierten Regeln markiert werden, wobei der Verfügbarkeitsstatus auf Berücksichtigung von Personalverfügbarkeit, Schichtindizes, die dem Personal zugewiesen sind, Schichttyp, der in einem Schichtplan erzeugt wird, Pausenzeit zwischen zwei Schichten und Schichten während geplanter Ereignisse basiert; und wobei die eine oder die mehreren vordefinierten Regeln auf dienstbasierten Assoziationen, fest basierten Assoziationen, primären und sekundären Fähigkeiten und rollenbasiert basieren; und
Berechnen, über den einen oder die mehreren Hardwareprozessoren (104), einer aktualisierten Menge von Artikeln in dem einen oder den mehreren Regalen des Geschäfts basierend auf einer Ausführung der Abholliste durch den einen oder die mehreren markierten fähigkeitsspezifischen Benutzer (218).

2. Prozessorimplementiertes Verfahren nach Anspruch 1, wobei der eine oder die mehreren konfigurierbaren Parameter (i) einen Aufwandtyp, der zum Ausführen der Abholliste erforderlich ist, (ii) eine Artikelpriorität und (iii) eine Abholgruppe umfassen.

3. Prozessorimplementiertes Verfahren nach Anspruch 1, wobei die Abholliste mindestens eines von (i) einem Artikel-Top-Stock-Abholort und (ii) einem Geschäfts-Backstage-Abholort umfasst.

4. Prozessorimplementiertes Verfahren nach Anspruch 1, wobei die eine oder die mehreren Beeinflussungsperioden mindestens eines von (i) einem oder mehreren Werbeangeboten, (ii) einer oder mehreren Saisons und (iii) einem oder mehreren Ereignissen, die während einer spezifischen Zeitdauer auftreten, umfassen.

5. System (100), umfassend:
einen Speicher (102), der Anweisungen speichert;
eine oder mehrere Kommunikationsschnittstellen (106); und
einen oder mehrere Hardwareprozessoren (104), die über die eine oder die mehreren Kommunikationsschnittstellen (106) mit dem Speicher (102) gekoppelt sind, wobei der eine oder die mehreren Hardwareprozessoren (104) durch die Anweisungen konfiguriert sind zum:
Empfangen von Eingangsdaten, die sich auf den Verkauf einer Mehrzahl von Artikeln beziehen, die spezifisch sind für (i) ein Geschäft, (ii) eine oder mehrere Lagerhaltungseinheiten, SKUs, und (iii) eine oder mehrere Beeinflussungsperioden;
Erzeugen, unter Verwendung mindestens eines Maschinenlernmodells, ML-Modells, unter einem oder mehreren ML-Modellen, einer Vorhersage der Verkaufsrate für einen oder mehrere Artikel aus der Mehrzahl von Artikeln für ein vordefiniertes Zeitintervall, wobei das mindestens eine MI,-Modell unter dem einen oder den mehreren ML-Modellen ausgewählt wird, basierend auf einem Grad des Trainings an historischen Verkaufsdaten und der Validierung der zugehörigen Leistung, einschließlich einer oder mehrerer Leistungsmetriken, durch:
Auswerten der einen oder mehreren Leistungsmetriken, die eine echte positive Rate, einen Rückruf, eine falsche positive Rate, eine Präzision, eine Genauigkeit, ein F-Maß und einen mittleren absoluten Fehler umfassen,
Auswählen des mindestens einen ML-Modells basierend auf einer besten Leistungsmetrik jedes ML-Modells des einen oder der mehreren ML-Modelle, und
Erzeugen, unter Verwendung des mindestens einen ML-Modells, der Vorhersage der Verkaufsrate für den einen oder die mehreren Artikel;
Identifizieren einer oder mehrerer Artikelbehältergrößen an jeder der einen oder mehreren SKUs und des vordefinierten Zeitintervalls basierend auf historischen Verkaufsdaten, wobei ein oder mehrere Artikel in jeder der einen oder mehreren Artikelbehältergrößen als während einer spezifischen Zeitdauer basierend auf einem Artikelschwellenwert für einen bestimmten Tag verkauft identifiziert werden;
Erstellen eines Verkaufsprofilers für jeden des einen oder der mehreren Artikel basierend auf der einen oder den mehreren Artikelbehältergrößen, die unter Verwendung der historischen Verkaufsdaten identifiziert werden;
Aufteilen der Vorhersage der Verkaufsrate für den einen oder die mehreren Artikel für das vordefinierte Zeitintervall in mindestens eines von (i) der einen oder den mehreren Artikelbehältergrößen und (ii) einer vorbestimmten Zeitperiode basierend auf dem Verkaufsprofiler;
Erzeugen einer oder mehrerer Nachfüllanforderungen für die eine oder die mehreren SKUs basierend auf einem vordefinierten Schwellenwert unter Verwendung der Vorhersage der Verkaufsrate für den einen oder die mehreren Artikel, die aufgeteilt werden, wobei die eine oder die mehreren Nachfüllanforderungen einen Satz von Artikeln umfassen, die Auffüllung in einem oder mehreren Regalen in dem Geschäft erfordern, wobei die eine oder die mehreren Nachfüllanforderungen für eine Mehrzahl von Zeitperioden basierend auf einer Mehrzahl von Ebenen der projizierten Menge jedes des Satzes von Artikeln in dem einen oder den mehreren Regalen in dem Geschäft gemäß einer oder mehreren Regeln erzeugt werden, wobei die eine oder die mehreren Regeln Erzeugen der einen oder der mehreren Nachfüllanforderungen mit einer von einer niedrigen Priorität, einer mittleren Priorität und einer hohen Priorität basierend auf der projizierten Menge jedes des Satzes von Artikeln in dem einen oder den mehreren Regalen umfassen, wobei jede der niedrigen Priorität, der mittleren Priorität und der hohen Priorität basierend auf dem vordefinierten Schwellenwert definiert ist;
Erstellen einer Abholliste basierend auf der einen oder den mehreren Nachfüllanforderungen und einem oder mehreren konfigurierbaren Parametern;
Markieren eines oder mehrerer fähigkeitsspezifischer Benutzer auf der Abholliste basierend auf dem einen oder den mehreren konfigurierbaren Parametern, wobei der eine oder die mehreren fähigkeitsspezifischen Benutzer auf der Abholliste basierend auf mindestens einem von (i) einem Verfügbarkeitsstatus und (ii) einer oder mehreren vordefinierten Regeln markiert werden, wobei der Verfügbarkeitsstatus auf Berücksichtigung von Personalverfügbarkeit, Schichtindizes, die dem Personal zugewiesen sind, Schichttyp, der in einem Schichtplan erzeugt wird, Pausenzeit zwischen zwei Schichten und Schichten während geplanter Ereignisse basiert; und wobei die eine oder die mehreren vordefinierten Regeln auf dienstbasierten Assoziationen, fest basierten Assoziationen, primären und sekundären Fähigkeiten und rollenbasiert basieren; und
Berechnen einer aktualisierten Menge von Artikeln in dem einen oder den mehreren Regalen des Geschäfts basierend auf einer Ausführung der Abholliste durch den einen oder die mehreren markierten fähigkeitsspezifischen Benutzer.

6. System nach Anspruch 5, wobei der eine oder die mehreren konfigurierbaren Parameter (i) einen Aufwandtyp, der zum Ausführen der Abholliste erforderlich ist, (ii) eine Artikelpriorität und (iii) eine Abholgruppe umfassen.

7. System nach Anspruch 5, wobei die Abholliste mindestens eines von (i) einem Artikel-Top-Stock-Abholort und (ii) einem Geschäfts-Backstage-Abholort umfasst.

8. System nach Anspruch 5, wobei die eine oder die mehreren Beeinflussungsperioden mindestens eines von (i) einem oder mehreren Werbeangeboten, (ii) einer oder mehreren Saisons und (iii) einem oder mehreren Ereignissen, die während einer spezifischen Zeitdauer auftreten, umfassen.

9. Ein oder mehrere nichtflüchtige maschinenlesbare Informationsspeichermedien, die eine oder mehrere Anweisungen umfassen, die bei Ausführung durch einen oder mehrere Hardwareprozessoren Folgendes bewirken:
Empfangen von Eingangsdaten, die sich auf den Verkauf einer Mehrzahl von Artikeln beziehen, die spezifisch sind für (i) ein Geschäft, (ii) eine oder mehrere Lagerhaltungseinheiten, SKUs, und (iii) eine oder mehrere Beeinflussungsperioden;
Erzeugen, unter Verwendung mindestens eines Maschinenlernmodells, ML-Modells, unter einem oder mehreren ML-Modellen, einer Vorhersage der Verkaufsrate für einen oder mehrere Artikel aus der Mehrzahl von Artikeln für ein vordefiniertes Zeitintervall, wobei das mindestens eine MI,-Modell unter dem einen oder den mehreren ML-Modellen ausgewählt wird, basierend auf einem Grad des Trainings an historischen Verkaufsdaten und der Validierung der zugehörigen Leistung, einschließlich einer oder mehrerer Leistungsmetriken, durch:
Auswerten der einen oder mehreren Leistungsmetriken, die eine echte positive Rate, einen Rückruf, eine falsche positive Rate, eine Präzision, eine Genauigkeit, ein F-Maß und einen mittleren absoluten Fehler umfassen,
Auswählen des mindestens einen ML-Modells basierend auf einer besten Leistungsmetrik jedes ML-Modells des einen oder der mehreren ML-Modelle, und
Erzeugen, unter Verwendung des mindestens einen ML-Modells, der Vorhersage der Verkaufsrate für den einen oder die mehreren Artikel;
Identifizieren einer oder mehrerer Artikelbehältergrößen an jeder der einen oder mehreren SKUs und des vordefinierten Zeitintervalls basierend auf historischen Verkaufsdaten, wobei ein oder mehrere Artikel in jeder der einen oder mehreren Artikelbehältergrößen als während einer spezifischen Zeitdauer basierend auf einem Artikelschwellenwert für einen bestimmten Tag verkauft identifiziert werden;
Erstellen eines Verkaufsprofilers für jeden des einen oder der mehreren Artikel basierend auf der einen oder den mehreren Artikelbehältergrößen, die unter Verwendung der historischen Verkaufsdaten identifiziert werden;
Aufteilen der Vorhersage der Verkaufsrate für den einen oder die mehreren Artikel für das vordefinierte Zeitintervall in mindestens eines von (i) der einen oder den mehreren Artikelbehältergrößen und (ii) einer vorbestimmten Zeitperiode basierend auf dem Verkaufsprofiler;
Erzeugen einer oder mehrerer Nachfüllanforderungen für die eine oder die mehreren SKUs basierend auf einem vordefinierten Schwellenwert unter Verwendung der Vorhersage der Verkaufsrate für den einen oder die mehreren Artikel, die aufgeteilt werden, wobei die eine oder die mehreren Nachfüllanforderungen einen Satz von Artikeln umfassen, die Auffüllung in einem oder mehreren Regalen in dem Geschäft erfordern, wobei die eine oder die mehreren Nachfüllanforderungen für eine Mehrzahl von Zeitperioden basierend auf einer Mehrzahl von Ebenen der projizierten Menge jedes des Satzes von Artikeln in dem einen oder den mehreren Regalen in dem Geschäft gemäß einer oder mehreren Regeln erzeugt werden, wobei die eine oder die mehreren Regeln Erzeugen der einen oder der mehreren Nachfüllanforderungen mit einer von einer niedrigen Priorität, einer mittleren Priorität und einer hohen Priorität basierend auf der projizierten Menge jedes des Satzes von Artikeln in dem einen oder den mehreren Regalen umfassen, wobei jede der niedrigen Priorität, der mittleren Priorität und der hohen Priorität basierend auf dem vordefinierten Schwellenwert definiert ist;
Erstellen einer Abholliste basierend auf der einen oder den mehreren Nachfüllanforderungen und einem oder mehreren konfigurierbaren Parametern;
Markieren eines oder mehrerer fähigkeitsspezifischer Benutzer auf der Abholliste basierend auf dem einen oder den mehreren konfigurierbaren Parametern, wobei der eine oder die mehreren fähigkeitsspezifischen Benutzer auf der Abholliste basierend auf mindestens einem von (i) einem Verfügbarkeitsstatus und (ii) einer oder mehreren vordefinierten Regeln markiert werden, wobei der Verfügbarkeitsstatus auf Berücksichtigung von Personalverfügbarkeit, Schichtindizes, die dem Personal zugewiesen sind, Schichttyp, der in einem Schichtplan erzeugt wird, Pausenzeit zwischen zwei Schichten und Schichten während geplanter Ereignisse basiert; und wobei die eine oder die mehreren vordefinierten Regeln auf dienstbasierten Assoziationen, fest basierten Assoziationen, primären und sekundären Fähigkeiten und rollenbasiert basieren; und
Berechnen einer aktualisierten Menge von Artikeln in dem einen oder den mehreren Regalen des Geschäfts basierend auf einer Ausführung der Abholliste durch den einen oder die mehreren markierten fähigkeitsspezifischen Benutzer.

10. Ein oder mehrere nichtflüchtige maschinenlesbare Informationsspeichermedien nach Anspruch 9, wobei der eine oder die mehreren konfigurierbaren Parameter (i) einen Aufwandtyp, der zum Ausführen der Abholliste erforderlich ist, (ii) eine Artikelpriorität und (iii) eine Abholgruppe umfassen, wobei die Abholliste mindestens eines von (i) einem Artikel-Top-Stock-Abholort und (ii) einem Geschäfts-Backstage-Abholort umfasst, und wobei die eine oder die mehreren Beeinflussungsperioden mindestens eines von (i) einem oder mehreren Werbeangeboten, (ii) einer oder mehreren Saisons und (iii) einem oder mehreren Ereignissen, die während einer spezifischen Zeitdauer auftreten, umfassen.

## Revendications

1. Procédé mis en oeuvre par processeur, comprenant :
la réception, par l'intermédiaire d'un ou plusieurs processeurs matériels (104), de données d'entrée relatives aux ventes d'une pluralité d'articles spécifiques à (i) un magasin, (ii) une ou plusieurs unités de gestion de stocks (SKU) et (iii) une ou plusieurs périodes d'influence (202) ;
la génération, à l'aide d'au moins un modèle d'apprentissage automatique (ML) parmi un ou plusieurs modèles ML par l'intermédiaire des un ou plusieurs processeurs matériels (104), d'une prévision de taux de ventes pour un ou plusieurs articles parmi la pluralité d'articles sur un intervalle de temps prédéfini (204), dans lequel le ou les modèles ML parmi les un ou plusieurs modèles ML sont sélectionnés, sur la base d'un niveau d'entraînement sur des données de vente historiques et d'une validation de performances associées incluant une ou plusieurs métriques de performance, par :
l'évaluation des une ou plusieurs métriques de performance comprenant un taux de vrais positifs, un rappel, un taux faux positif, une précision, une exactitude, une mesure F et une erreur absolue moyenne,
la sélection d'au moins un modèle ML sur la base d'une meilleure métrique de performance de chaque modèle ML des un ou plusieurs modèles ML, et
la génération, à l'aide de l'au moins un modèle ML, de la prévision de taux de ventes pour les un ou plusieurs articles ;
l'identification, par l'intermédiaire des un ou plusieurs processeurs matériels (104), d'une ou plusieurs tailles de lots d'article au niveau de chacune des une ou plusieurs SKU et de l'intervalle de temps prédéfini sur la base des données de vente historiques (206), dans lequel un ou plusieurs articles de chacune des une ou plusieurs tailles de lots d'article sont identifiés comme étant vendus pendant une durée spécifique sur la base d'un seuil d'article pour une journée donnée ;
la création, par l'intermédiaire des un ou plusieurs processeurs matériels (104), d'un profileur de vente pour chacun des un ou plusieurs articles sur la base des une ou plusieurs tailles de lots d'article identifiées à l'aide des données de vente historiques (208) ;
la division, par l'intermédiaire des un ou plusieurs processeurs matériels (104), de la prévision de taux de ventes pour les un ou plusieurs articles sur l'intervalle de temps prédéfini en au moins l'une parmi (i) les une ou plusieurs tailles de lots d'article, et (ii) une période de temps prédéterminée sur la base du profileur de vente (210) ;
la génération, par l'intermédiaire des un ou plusieurs processeurs matériels (104), d'une ou plusieurs demandes de réapprovisionnement pour les une ou plusieurs SKU sur la base d'un seuil prédéfini à l'aide de la prévision de taux de ventes pour les un ou plusieurs articles répartis (212), dans lequel les une ou plusieurs demandes de réapprovisionnement comprennent un ensemble d'articles nécessitant un réapprovisionnement sur une ou plusieurs étagères du magasin, dans lequel les une ou plusieurs demandes de réapprovisionnement sont générées pour une pluralité de périodes sur la base d'une pluralité de niveaux de quantité projetée de chacun de l'ensemble d'articles sur les une ou plusieurs étagères du magasin selon une ou plusieurs règles, dans lequel les une ou plusieurs règles comprennent la génération des une ou plusieurs demandes de réapprovisionnement avec l'une parmi une priorité faible, une priorité moyenne, et une priorité élevée, sur la base de la quantité projetée de chacun de l'ensemble d'articles sur les une ou plusieurs étagères, chacune de la priorité faible, de la priorité moyenne, et de la priorité élevée étant définie sur la base du seuil prédéfini ;
la création, par l'intermédiaire des un ou plusieurs processeurs matériels (104), d'une liste de prélèvement sur la base des une ou plusieurs demandes de réapprovisionnement et d'un ou plusieurs paramètres configurables (214) ;
l'attribution, par l'intermédiaire des un ou plusieurs processeurs matériels (104), d'un ou plusieurs utilisateurs spécifiques ayant des compétences à la liste de prélèvement sur la base des un ou plusieurs paramètres configurables (216), dans lequel les un ou plusieurs utilisateurs spécifiques à la compétence sont attribués sur la liste de collecte sur la base d'au moins l'un parmi (i) un statut de disponibilité, et (ii) une ou plusieurs règles prédéfinies, dans lequel le statut de disponibilité est basé sur la prise en considération de la disponibilité du personnel, des indices de changement de poste attribués au personnel, du type de changement de poste généré dans un fichier de changement de poste, du temps de pause entre deux changements de poste et des changements de poste pendant des événements planifiés ; et dans lequel les une ou plusieurs règles prédéfinies comprennent les rôles d'associés basés sur le service, d'associés basés sur des fixes, des compétences primaires et secondaires, et basées sur le rôle ; et
le calcul, par l'intermédiaire des un ou plusieurs processeurs matériels (104), d'une quantité mise à jour d'articles sur les une ou plusieurs étagères du magasin sur la base d'une exécution de la liste de prélèvement par les un ou plusieurs utilisateurs spécifiques à la compétence attribués (218).

2. Procédé mis en oeuvre par processeur selon la revendication 1, dans lequel les un ou plusieurs paramètres configurables comprennent (i) un type d'effort requis pour exécuter la liste de prélèvement, (ii) une priorité d'article, et (iii) un groupe de prélèvement.

3. Procédé mis en oeuvre par processeur selon la revendication 1, dans lequel la liste de prélèvement comprend au moins l'un parmi (i) un emplacement de prélèvement en stock supérieur pour un article, et (ii) un emplacement de prélèvement en arrière-boutique du magasin.

4. Procédé mis en oeuvre par processeur selon la revendication 1, dans lequel les une ou plusieurs périodes d'influence comprennent au moins l'un parmi (i) une ou plusieurs offres promotionnelles, (ii) une ou plusieurs saisons, et (iii) un ou plusieurs événements survenant pendant une durée spécifique.

5. Système (100), comprenant :
une mémoire (102) stockant des instructions ;
une ou plusieurs interfaces de communication (106) ; et
un ou plusieurs processeurs matériels (104) couplés à la mémoire (102) par l'intermédiaire des une ou plusieurs interfaces de communication (106), dans lequel les un ou plusieurs processeurs matériels (104) sont configurés par les instructions pour :
la réception de données d'entrée relatives aux ventes d'une pluralité d'articles spécifiques à (i) un magasin, (ii) une ou plusieurs unités de gestion de stocks (SKU) et (iii) une ou plusieurs périodes d'influence ;
la génération, à l'aide d'au moins un modèle d'apprentissage automatique (ML) parmi un ou plusieurs modèles ML par l'intermédiaire des un ou plusieurs processeurs matériels (104), d'une prévision de taux de ventes pour un ou plusieurs articles parmi la pluralité d'articles sur un intervalle de temps prédéfini, dans lequel le ou les modèles ML parmi les un ou plusieurs modèles ML sont sélectionnés, sur la base d'un niveau d'entraînement sur des données de vente historiques et d'une validation de performances associées incluant une ou plusieurs métriques de performance, par :
l'évaluation des une ou plusieurs métriques de performance comprenant un taux de vrais positifs, un rappel, un taux faux positif, une précision, une exactitude, une mesure F et une erreur absolue moyenne,
la sélection d'au moins un modèle ML sur la base d'une meilleure métrique de performance de chaque modèle ML des un ou plusieurs modèles ML, et
la génération, à l'aide de l'au moins un modèle ML, de la prévision de taux de ventes pour les un ou plusieurs articles ;
l'identification, par l'intermédiaire des un ou plusieurs processeurs matériels, d'une ou plusieurs tailles de lots d'article au niveau de chacune des une ou plusieurs SKU et de l'intervalle de temps prédéfini sur la base des données de vente historiques, dans lequel un ou plusieurs articles de chacune des une ou plusieurs tailles de lots d'article sont identifiés comme étant vendus pendant une durée spécifique sur la base d'un seuil d'article pour une journée donnée ;
la création d'un profileur de vente pour chacun des un ou plusieurs articles sur la base des une ou plusieurs tailles de lots d'article identifiées à l'aide des données de vente historiques ;
la division de la prévision de taux de ventes pour les un ou plusieurs articles sur l'intervalle de temps prédéfini en au moins l'une parmi (i) les une ou plusieurs tailles de lots d'article, et (ii) une période de temps prédéterminée sur la base du profileur de vente ;
la génération d'une ou plusieurs demandes de réapprovisionnement pour les une ou plusieurs SKU sur la base d'un seuil prédéfini à l'aide de la prévision de taux de ventes pour les un ou plusieurs articles répartis, dans lequel les une ou plusieurs demandes de réapprovisionnement comprennent un ensemble d'articles nécessitant un réapprovisionnement sur une ou plusieurs étagères du magasin, dans lequel les une ou plusieurs demandes de réapprovisionnement sont générées pour une pluralité de périodes sur la base d'une pluralité de niveaux de quantité projetée de chacun de l'ensemble d'articles sur les une ou plusieurs étagères du magasin selon une ou plusieurs règles, dans lequel les une ou plusieurs règles comprennent la génération des une ou plusieurs demandes de réapprovisionnement avec l'une parmi une priorité faible, une priorité moyenne, et une priorité élevée, sur la base de la quantité projetée de chacun de l'ensemble d'articles sur les une ou plusieurs étagères, chacune de la priorité faible, de la priorité moyenne, et de la priorité élevée étant définie sur la base du seuil prédéfini ;
la création liste de prélèvement sur la base des une ou plusieurs demandes de réapprovisionnement et d'un ou plusieurs paramètres configurables ;
l'attribution d'un ou plusieurs utilisateurs spécifiques ayant des compétences à la liste de prélèvement sur la base des un ou plusieurs paramètres configurables, dans lequel les un ou plusieurs utilisateurs spécifiques à la compétence sont attribués sur la liste de collecte sur la base d'au moins l'un parmi (i) un statut de disponibilité, et (ii) une ou plusieurs règles prédéfinies, dans lequel le statut de disponibilité est basé sur la prise en considération de la disponibilité du personnel, des indices de changement de poste attribués au personnel, du type de changement de poste généré dans un fichier de changement de poste, du temps de pause entre deux changements de poste et des changements de poste pendant des événements planifiés ; et dans lequel les une ou plusieurs règles prédéfinies comprennent les rôles d'associés basés sur le service, d'associés basés sur des fixes, des compétences primaires et secondaires, et basées sur le rôle ; et
le calcul d'une quantité mise à jour d'articles sur les une ou plusieurs étagères du magasin sur la base d'une exécution de la liste de prélèvement par les un ou plusieurs utilisateurs spécifiques à la compétence attribués.

6. Système selon la revendication 5, dans lequel les un ou plusieurs paramètres configurables comprennent (i) un type d'effort requis pour exécuter la liste de prélèvement, (ii) une priorité d'article, et (iii) un groupe de prélèvement.

7. Système selon la revendication 5, dans lequel la liste de prélèvement comprend au moins l'un parmi (i) un emplacement de prélèvement en stock supérieur pour un article, et (ii) un emplacement de prélèvement en arrière-boutique du magasin.

8. Système selon la revendication 5, dans lequel les une ou plusieurs périodes d'influence comprennent au moins l'un parmi (i) une ou plusieurs offres promotionnelles, (ii) une ou plusieurs saisons, et (iii) un ou plusieurs événements survenant pendant une durée spécifique.

9. Un ou plusieurs supports de stockage d'informations lisibles par machine non transitoires comprenant une ou plusieurs instructions qui, lorsqu'elles sont exécutées par un ou plusieurs processeurs matériels, amènent :
la réception de données d'entrée relatives aux ventes d'une pluralité d'articles spécifiques à (i) un magasin, (ii) une ou plusieurs unités de gestion de stocks (SKU) et (iii) une ou plusieurs périodes d'influence ;
la génération, à l'aide d'au moins un modèle d'apprentissage automatique (ML) parmi un ou plusieurs modèles ML par l'intermédiaire des un ou plusieurs processeurs matériels (104), d'une prévision de taux de ventes pour un ou plusieurs articles parmi la pluralité d'articles sur un intervalle de temps prédéfini, dans lequel le ou les modèles ML parmi les un ou plusieurs modèles ML sont sélectionnés, sur la base d'un niveau d'entraînement sur des données de vente historiques et d'une validation de performances associées incluant une ou plusieurs métriques de performance, par :
l'évaluation des une ou plusieurs métriques de performance comprenant un taux de vrais positifs, un rappel, un taux faux positif, une précision, une exactitude, une mesure F et une erreur absolue moyenne,
la sélection d'au moins un modèle ML sur la base d'une meilleure métrique de performance de chaque modèle ML des un ou plusieurs modèles ML, et
la génération, à l'aide de l'au moins un modèle ML, de la prévision de taux de ventes pour les un ou plusieurs articles ;
l'identification, par l'intermédiaire des un ou plusieurs processeurs matériels, d'une ou plusieurs tailles de lots d'article au niveau de chacune des une ou plusieurs SKU et de l'intervalle de temps prédéfini sur la base des données de vente historiques, dans lequel un ou plusieurs articles de chacune des une ou plusieurs tailles de lots d'article sont identifiés comme étant vendus pendant une durée spécifique sur la base d'un seuil d'article pour une journée donnée ;
la création d'un profileur de vente pour chacun des un ou plusieurs articles sur la base des une ou plusieurs tailles de lots d'article identifiées à l'aide des données de vente historiques ;
la division de la prévision de taux de ventes pour les un ou plusieurs articles sur l'intervalle de temps prédéfini en au moins l'une parmi (i) les une ou plusieurs tailles de lots d'article, et (ii) une période de temps prédéterminée sur la base du profileur de vente ;
la génération d'une ou plusieurs demandes de réapprovisionnement pour les une ou plusieurs SKU sur la base d'un seuil prédéfini à l'aide de la prévision de taux de ventes pour les un ou plusieurs articles répartis, dans lequel les une ou plusieurs demandes de réapprovisionnement comprennent un ensemble d'articles nécessitant un réapprovisionnement sur une ou plusieurs étagères du magasin, dans lequel les une ou plusieurs demandes de réapprovisionnement sont générées pour une pluralité de périodes sur la base d'une pluralité de niveaux de quantité projetée de chacun de l'ensemble d'articles sur les une ou plusieurs étagères du magasin selon une ou plusieurs règles, dans lequel les une ou plusieurs règles comprennent la génération des une ou plusieurs demandes de réapprovisionnement avec l'une parmi une priorité faible, une priorité moyenne, et une priorité élevée, sur la base de la quantité projetée de chacun de l'ensemble d'articles sur les une ou plusieurs étagères, chacune de la priorité faible, de la priorité moyenne, et de la priorité élevée étant définie sur la base du seuil prédéfini ;
la création liste de prélèvement sur la base des une ou plusieurs demandes de réapprovisionnement et d'un ou plusieurs paramètres configurables ;
l'attribution d'un ou plusieurs utilisateurs spécifiques ayant des compétences à la liste de prélèvement sur la base des un ou plusieurs paramètres configurables, dans lequel les un ou plusieurs utilisateurs spécifiques à la compétence sont attribués sur la liste de collecte sur la base d'au moins l'un parmi (i) un statut de disponibilité, et (ii) une ou plusieurs règles prédéfinies, dans lequel le statut de disponibilité est basé sur la prise en considération de la disponibilité du personnel, des indices de changement de poste attribués au personnel, du type de changement de poste généré dans un fichier de changement de poste, du temps de pause entre deux changements de poste et des changements de poste pendant des événements planifiés ; et dans lequel les une ou plusieurs règles prédéfinies comprennent les rôles d'associés basés sur le service, d'associés basés sur des fixes, des compétences primaires et secondaires, et basées sur le rôle ; et
le calcul d'une quantité mise à jour d'articles sur les une ou plusieurs étagères du magasin sur la base d'une exécution de la liste de prélèvement par les un ou plusieurs utilisateurs spécifiques à la compétence attribués.

10. Un ou plusieurs supports de stockage d'informations lisibles par machine non transitoires selon la revendication 9, dans lequel les un ou plusieurs paramètres configurables comprennent (i) un type d'effort requis pour exécuter la liste de prélèvement, (ii) une priorité d'article, et (iii) un groupe de prélèvement, dans lequel la liste de prélèvement comprend au moins l'un parmi (i) un emplacement de collecte de stock supérieur d'article, et (ii) un emplacement de prélèvement en arrière-boutique de magasin, et dans lequel les une ou plusieurs périodes d'influence comprennent au moins l'un parmi (i) une ou plusieurs offres promotionnelles, (ii) une ou plusieurs saisons, et (iii) un ou plusieurs événements survenant pendant une durée spécifique.
